# EUROPEAN PATENT APPLICATION

(11) **EP 2 063 475 A1**
(43) Date of publication of application: **27.05.2009**
(21) Application number: 07791090.9
(22) Date of filing: 20.07.2007
(51) Int. Cl.: H01M 4/06, H01M 4/52, H01M 4/62, H01M 6/08

(54) **ALKALINE PRIMARY BATTERY**

(30) Priority: 28.07.2006 JP 2006206566
(71) Applicant: Panasonic Corporation, Kadoma-shi Osaka 571-8501 (JP)
(72) Inventor: KATO, Fumioc/o Matsushita Electric Indust.Ltd, Chuo-Ku ,Osaka (JP); SHIMAMURA, Harunari c/o Matsushita Electric trial, Osaka (JP); NUNOME, Jun c/o matsushita Electr, Osaka 540-6207 (JP)
(74) Representative: TBK-Patent
(86) International application number: PCT/JP2007/064353
(87) International publication number: WO 2008/013115

(57) **Abstract**

An alkaline primary battery of the present invention includes a positive electrode including a positive electrode active material, a negative electrode including a negative electrode active material, a separator interposed between the positive electrode and the negative electrode, and an electrolyte. The negative electrode further includes at least one compound selected from the group consisting of a tetramethylammonium compound, a tetraethylammonium compound, and a tetrapropylammonium compound.

## Description

### Technical Field

The present invention relates to an alkaline primary battery using zinc or a zinc alloy as a negative electrode active material, an aqueous alkaline solution as an electrolyte, and manganese dioxide, nickel oxyhydroxide, and the like as a positive electrode active material.

### Background Art

Alkaline primary batteries represented by alkaline manganese dry batteries, because of their general-purpose application and low prices, have been widely used as power sources for various equipment. In addition, in recent years, the use of alkaline primary batteries (nickel-based dry batteries) with improved output characteristics by the addition of nickel oxyhydroxide to their positive electrodes have been rapidly expanding in response to the digitalization of equipment.

In the alkaline primary batteries, an irregularly shaped zinc powder obtained by a gas atomizing method and the like is used for the negative electrode active material. The zinc powder is readily corroded in the alkaline electrolyte solution, which facilitates the evolution of hydrogen gas. This causes an increase in battery internal pressure and an electrolyte leakage. An improvement in the reliability of alkaline primary batteries can be achieved, therefore, by inhibiting the corrosion of zinc in the alkaline electrolyte solution.

In the past, as a corrosion prevention method, mercury was added into the negative electrode to amalgamate the surface of zinc powder in order to raise the hydrogen overvoltage. However, from around 1980 to around 1990, out of environmental concern, the addition of mercury had been abolished mainly in the alkaline manganese dry batteries. As a means for preventing corrosion of zinc powder to replace the means of adding mercury, there have been proposed a technique to improve the corrosion resistance by including a small amount of aluminum, bismuth, indium, or the like in the zinc powder to make it a zinc alloy powder (Patent Document 1), and a technique of adding an organic anticorrosive such as a surfactant into an electrolyte included in a gelled negative electrode.

The mechanism of the surfactant serving as an anticorrosive to be added into the electrolyte included in the gelled negative electrode is considered as follows. That is, the hydrophilic groups in the molecules included in the surfactant are adsorbed on the surface of zinc particles, whereas the hydrophobic groups in the molecules included in the surfactant are oriented in the electrolyte side, whereby a protective coating film layer is formed. The formation of the protective coating film layer brings about an anticorrosion effect due to a water-repellent action. The water-repellent action by this protective coating film layer prevents water molecules and hydroxide ions from approaching the surface of zinc particles. This consequently inhibits the reactions represented by the following general formulae (1) and (2). The surfactant molecules adsorbed on the surface of zinc particles are desorbed from the surface of zinc particles and diffused into the electrolyte during discharge of the negative electrode.

Zn + 40H⁻ → Zn(OH)₄²⁻ + 2e⁻ (1)

2H₂O +2e⁻ → 20H⁻ + H₂ (2)

Zinc generally has a property to be negatively charged in an aqueous alkaline solution. For this reason, it is considered that if a cationic surfactant having an opposite electric charge is selected, a protective coating film layer having a higher strength can be formed by utilizing an electrostatic action (attractive force). In view of the above, there has been proposed adding a fourth grade ammonium salt of perfluoroalkyl and the like (Patent Document 2), n-dodecyltrimethylammonium chloride and the like (Patent Document 3), or tetrabutylammonium hydroxide and the like (Patent Document 4), to a gelled negative electrode.
Patent Document 1: Japanese Examined Patent Publication No. Hei 3-71737
Patent Document 2: Japanese Patent No. 2985445
Patent Document 3: Japanese Laid-Open Patent Publication No. 2003-151569
Patent Document 4: Japanese Laid-Open Patent Publication No. Hei 6-223828

### Disclosure of the Invention

### Problem To be Solved by the Invention

In the cationic surfactants disclosed as having an effective anticorrosion action in the foregoing Patent Document 2 and Patent Document 3, however, the symmetry of the ion as a whole is low because of its structure represented by the chemical formula R(CH₃)₃N⁺, in which carbon chain R (a hydrophobic group) having a comparatively long structure and a short carbon chain such as a methyl group are bonded with a hetero atom such as nitrogen (a hydrophilic group). When the added amount of the surfactant having a low symmetry is small, because of the difficulty in forming a protective coating film layer in which the ions constituting the surfactant are closely oriented and adsorbed on the surface of zinc particles, it is impossible to provide a sufficient anticorrosion effect. In contrast, when the added amount of the foregoing surfactant is increased in order to provide a sufficient anticorrosion effect, the ions constituting the surfactant cannot be sufficiently desorbed and diffused from the surface of zinc particles into the electrolyte in the event of instantaneous discharge at a large current. As a result, disadvantageously, the forgoing electrode reaction represented by the formula (1) is inhibited, causing a drop in the closed-circuit voltage (CCV) of the battery.

The tetrabutylammonium hydroxide as proposed in Patent Document 4 includes tetrabutylammonium ions ((C₄H₉)₄N⁺) having a high symmetry and is therefore preferred in light of its capability of forming a protective coating film layer in which the ions are closely oriented and adsorbed on the surface of the zinc. However, since the ionic size (formula weight) is large, the speed of the diffusion of the ions constituting the surfactant into the electrolyte during discharge tends to be slowed. As a result, as in the case above, disadvantageously, a drop in the closed-circuit voltage (CCV) of the battery occurs in the event of instantaneous discharge at a large current.

In view of the above, in order to solve the problems above, the present invention intends to provide an alkaline primary battery having excellent discharge characteristics (large current discharge characteristics) and leakage resistance performance, in which the inclusion of a surfactant having an anticorrosion effect in the negative electrode including zinc will not inhibit discharge.

### Means for Solving the Problem

The present invention provides an alkaline primary battery including a positive electrode including a positive electrode active material, a negative electrode including a negative electrode active material, a separator interposed between the positive electrode and the negative electrode, and an electrolyte, wherein the negative electrode further includes at least one compound selected from the group consisting of a tetramethylammonium compound, a tetraethylammonium compound, and a tetrapropylammonium compound.

In such a structure, the negative electrode includes a cationic surfactant having a high symmetry. As such, even when the added amount of the surfactant is small, a protective coating film layer in which the ions constituting the surfactant are closely oriented and adsorbed on the surface of zinc particles can be obtained. Moreover, since the ionic size (formula weight) of the foregoing surfactant is moderately small, the speed of desorption and diffusion of the foregoing ions from the surface of zinc particles into the electrolyte during instantaneous discharge at a large current is fast, and therefore a drop in the closed-circuit voltage (CCV) of the battery hardly occurs. For this reason, it is possible to achieve excellent discharge characteristics (in particular, large current discharge characteristics) in an alkaline primary battery while maintaining a sufficient anticorrosion effect in the negative electrode.

Further, in the foregoing alkaline primary battery, it is preferable that at least one compound as described above is a hydroxide, a chloride, or a bromide.
Among these, it is more preferable that the compound is a hydroxide.

It is preferable that the negative electrode includes the compound in an amount of 0.002 to 0.02 part by weight per 100 parts by weight of the negative electrode active material.
Furthermore, when the positive electrode includes nickel oxyhydroxide, the present invention is suitably enabled.

### Effect of the present invention

According to the present invention, it is possible to provide an alkaline primary battery having excellent discharge characteristics (in particular, large current discharge characteristics) and leakage resistance performance, in which the inclusion of a surfactant having an anticorrosion effect in the negative electrode including zinc will not inhibit discharge.

### Brief Description of the Drawings

[FIG. 1] A partially cross-sectional front view of an alkaline dry battery according to experimental examples of the present invention.
[FIG. 2] A graph showing measurement results of the voltage of Batteries (2), (14) and (21) each connected to a 1 Ω resistor.

### Best Mode for Carrying Out the Invention

The present invention relates to an alkaline primary battery including a positive electrode including a positive electrode active material, a negative electrode including a negative electrode active material, a separator interposed between the positive electrode and the negative electrode, and an electrolyte. The negative electrode further includes at least one compound selected from the group consisting of a tetramethylammonium compound, a tetraethylammonium compound, and a tetrapropylammonium compound.

Since the foregoing compound is a cationic surfactant having a high symmetry, an alkaline primary battery having excellent discharge characteristics and corrosion resistance can be obtained. In light of the balance between a) the molecular size (molecular weight) and b) the discharge characteristics and the corrosion resistance, among the compounds as listed above, tetraethylammonium is particularly preferred.
The foregoing compound as described above is, for example, a hydroxide, a chloride, or a bromide. Among these, it is particularly preferable that the foregoing compound is a hydroxide because it can provide more excellent discharge characteristics for the alkaline primary battery.

For the negative electrode, for example, a gelled negative electrode made of a mixture of a negative electrode active material, the foregoing anticorrosive (surfactant), an electrolyte, and a gelling agent is used. For the gelling agent for forming the electrolyte into a gel, a conventionally known one may be used. For example, it is possible to use sodium polyacrylate and the like. For the negative electrode active material, for example, zinc, or a zinc alloy including aluminum, bismuth, indium, or the like may be used. For this negative electrode active material, for example, it is possible to use a zinc powder or a zinc alloy powder obtained by a gas atomizing method and the like.

The content of the anticorrosive in the gelled negative electrode is preferably 0.002 to 0.02 part by weight per 100 parts by weight of the negative electrode active material. When the content of the anticorrosive in the gelled negative electrode is 0.002 part by weight or more per 100 parts by weight of the negative electrode active material, more excellent anticorrosion effect can be obtained. On the other hand, when the content of the anticorrosive in the gelled negative electrode is 0.02 part by weight or less per 100 parts by weight of the negative electrode active material, excellent discharge characteristics can be readily obtained.

For the positive electrode, for example, a positive electrode material mixture pellet made of a mixture of a positive electrode active material (at least one of manganese dioxide and nickel oxyhydroxide), a conductive material such as graphite, and an electrolyte is used.
The positive electrode material mixture pellet is obtained in the following manner. To a mixed powder of a positive electrode active material and a conductive material, an electrolyte is added, and then stirred and mixed uniformly with a mixer to obtain particles with a certain particle size, whereby a particulate material is obtained. This particulate material is molded under pressure into a hollow cylindrical shape.

Batteries including a positive electrode including nickel oxyhydroxide, compared with the conventional alkaline manganese batteries, have a feature in that a large amount of impurities is contained in the positive electrodes, and the battery performance is greatly affected by the difference in discharge performance possessed by the negative electrodes.

The manganese dioxide used for the positive electrode of an alkaline manganese battery is prepared by electrodeposition, whereas the nickel oxyhydroxide is produced through a process of chemical oxidation of nickel hydroxide prepared by crystallization. This results in a higher content of various impurities in the nickel oxyhydroxide as compared with in the manganese dioxide. For this reason, the battery including nickel oxyhydroxide contains a larger amount of impurities, and the corrosion of the negative electrode zinc and gas evolution are readily promoted.

On the other hand, when the positive electrode includes nickel oxyhydroxide, a high positive electrode potential is maintained, and the positive electrode utilization rate during large current discharge is improved. As a result, the large current discharge characteristics of the battery as a whole tend to be controlled by the negative electrode, and a slight difference in discharge performance possessed by the negative electrodes becomes evident as a difference in discharge characteristics possessed by the batteries.

Since the battery including a positive electrode including nickel oxyhydroxide has a feature as described above, the use of the anticorrosive in the present invention is extremely effective. The use of the foregoing anticorrosive in the battery including a positive electrode including nickel oxyhydroxide makes it possible to obtain a high discharge performance in the negative electrode while maintaining a sufficient anticorrosion effect of the negative electrode. Consequently, the reliability and the large current discharge characteristics in the battery including nickel oxyhydroxide can be improved.

The nickel oxyhydroxide used for the positive electrode is prepared by, for example, neutralizing an aqueous nickel sulfate solution with alkali to give nickel hydroxide, and then chemically oxidizing the nickel hydroxide with an oxidizing agent such as an aqueous sodium hypochlorite solution. The nickel oxyhydroxide is contained in the positive electrode material mixture, for example, preferably in an amount of 10 to 80 wt%, and in particular, preferably in an amount of 30 to 60 wt%.

As the electrolyte included in the battery of the present invention, a conventionally known one may be used. For example, it is possible to use an aqueous potassium hydroxide solution with a small amount of zinc oxide dissolved therein. As the separator, as in the case above, a conventionally known one may be used. For example, it is possible to use a composite fiber made of vinylon and cellulose, a composite fiber made of polypropylene and cellulose, and the like.

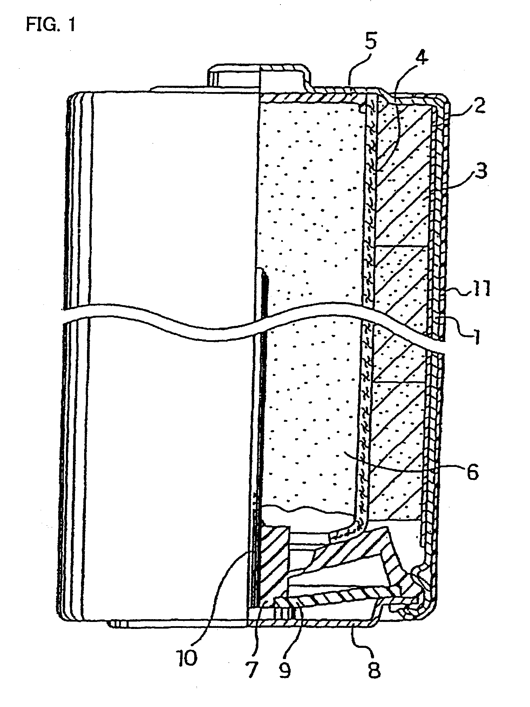

A description is given below of an alkaline dry battery which is an embodiment of the present invention. As shown in FIG. 1, this alkaline dry battery includes pellets 3 of positive electrode material mixture including manganese dioxide, a gelled negative electrode 6 including zinc or a zinc alloy and an anticorrosive, and a separator 4 disposed between the pellets 3 of positive electrode material mixture and the gelled negative electrode 6. A positive electrode case 1 is made of a nickel-plated steel plate. A graphite coating film 2 is formed in the interior of the positive electrode case 1.

The alkaline dry battery as shown FIG. 1 can be fabricated in the following manner. First, a plurality of the short cylindrical pellets 3 of positive electrode material mixture are inserted in the interior of the positive electrode case 1 and are repressed to be brought into close contact with the inner face of the positive electrode case 1. Next, the separator 4 and a bottom paper 5 for insulation are inserted in the inside of the pellets 3 of positive electrode material mixture. Thereafter, an electrolyte is injected for the purpose of wetting the separator 4 and the pellets 3 of positive electrode material mixture. After the injection of the electrolyte, the gelled negative electrode 6 is charged into the inside of the separator 4. Subsequently, a negative electrode current collector 10, which is integrated with a resin sealing plate 7, a bottom plate 8 also serving as a negative electrode terminal, and an insulating washer 9, is inserted into the gelled negative electrode 6. The open edge of the positive electrode case 1 is crimped onto the circumference of the bottom plate 8 with the edge of the sealing plate 7 interposed therebetween, so that the opening of the positive electrode case 1 is brought into close contact therewith. Lastly, the outer surface of the positive electrode case 1 is covered with an outer label 11, whereby the alkaline dry battery of the present invention can be obtained.

In the AA-size alkaline manganese dry battery according to the embodiment above, for example, the minimum value of a closed-circuit voltage of thereof when connected to a 1 Ω resistor for 100 milliseconds at 20°C can be 1.45 V or higher, and therefore excellent large current discharge characteristics can be obtained.
Further, in the AA-size nickel-based alkaline manganese dry battery (nickel manganese dry battery) in which the positive electrode pellet according to the embodiment above further includes nickel oxyhydroxide, for example, the minimum value of a closed-circuit voltage of thereof when connected to a 1 Ω resistor for 100 milliseconds at 20°C can be 1.55 V or higher, and therefore excellent large current discharge characteristics can be obtained.

Although the AA-size dry battery is described in the embodiment above, it is considered that the effect of the prevent invention itself can be obtained in an alkaline manganese dry battery of a size other than the AA-size and in a battery having another structure, such as a battery of alkaline button type, prismatic type, or the like. Moreover, in an alkaline primary battery using silver oxide, air, or the like other than manganese dioxide and nickel oxyhydroxide as the positive electrode active material, the same effect can be expected.
In the following, examples of the present invention are described in detail; however, the present invention is not limited to these examples.

### Examples

### <<Experimental Example 1>>

A zinc alloy powder containing Al, Bi and In in an amount of 0.003 wt%, 0.01 wt%, and 0.025 wt%, respectively, was prepared by a gas atomizing method. The resultant zinc alloy powder was classified with a sieve to give a zinc alloy powder for evaluation having a particle size range of 35 to 300 meshes and containing particles having a particle diameter of 200 meshes (75 µm) or less in an amount of 20 wt%. The alloy powder for evaluation thus obtained was used as a negative electrode active material.
Here, the zinc alloy powder for evaluation was subjected to measurement with a laser diffraction particle size distribution meter. The results found that the mean particle diameter (D₅₀) of the zinc alloy powder was 150 µm, and the content ratio of the particles having a particle diameter of 200 meshes (75 µm) or less in the zinc alloy powder was 20%.

Next, to 100 parts by weight of a 36 wt% aqueous potassium hydroxide solution (containing 2 wt% ZnO), 2.3 parts by weight of sodium polyacrylate was added and mixed, whereby a gelled electrolyte was obtained. The gelled electrolyte thus obtained was thereafter allowed to stand for 24 hours to be sufficiently aged.

To a predetermined amount of the gelled electrolyte obtained in the above, the foregoing zinc alloy powder for evaluation was added in an amount 1.8 times as much as that of the gelled electrolyte by weight ratio and each of the surfactants (1) to (20) shown in Table 1 was added and these were sufficiently mixed, whereby gelled negative electrodes (1) to (20) corresponding to each of the surfactants were prepared. The added amount of the surfactant was adjusted to be 0.01 part by weight per 100 parts by weight of the negative electrode active material (zinc alloy powder).

A gelled negative electrode (21) for evaluation was fabricated in the same manner as in the above except that no surfactant was added to the gelled negative electrode.
Table 1 shows a list of surfactants used as an anticorrosive. Most of these are a chemical agent available from Tokyo Chemical Industrial Co., Ltd., or industrial chemicals available from Kao Corporation and Lion Corporation, which were used for evaluation.

**[Table 1]**

| No. | Chemical formula of surfactant | Remark |
|---|---|---|
| (1) | (CH₃)₄NOH | Tetramethylammonium hydroxide |
| (2) | (C₂H₅)₄NOH | Tetraethylammonium hydroxide |
| (3) | (C₃H₈)₄NOH | Tetrapropylammonium hydroxide |
| (4) | (C₂H₅)₄NCl | Tetraethylammonium chloride |
| (5) | (C₂H₅)₄NBr | Tetraethylammonium bromide |
| (6) | C₂H₅(CH₃)₃NOH | Ethyltrimethylammonium hydroxide |
| (7) | C₃H₇(CH₃)₃NOH | Propyltrimethylammonium hydroxide |
| (8) | C₆H₁₃(CH₃)₃NOH | n-hexyltrimethylammonium hydroxide |
| (9) | C₁₂H₂₅(CH₃)₃NOH | n-dodecyltrimethylammonium hydroxide |
| (10) | C₆H₁₃(C₂H₅)₃NOH | n-hexyltriethylammonium hydroxide |
| (11) | C₂H₅(CH₃)₃NCl | Ethyltrimethylammonium chloride |
| (12) | C₃H₇CH₃)₃NCl | Propyltrimethylammonium chloride |
| (13) | C₆H₁₃(CH₃)₃NCl | n-hexyltrimethylammonium chloride |
| (14) | C₁₂H₂₅(CH₃)₃NCl | n-dodecyltrimethylammonium chloride |
| (15) | C₆H₁₃(C₂H₅)₃NCl | n-hexyltriethylammonium chloride |
| (16) | C₂F₅(CH₃)₃NCl | Perfluoroalkyl trimethylammonium (a chloride) |
| (17) | C₄F₉(CH₃)₃NCl | |
| (18) | C₈F₁₇(CH₃)₃NCl | |
| (19) | C₁₀F₂₁(CH₃)₃NCl | |
| (20) | (C₄H₉)₄NOH | Tetrabutylammonium hydroxide |
| (21) | - | Without |

Further, electrolytic manganese dioxide and graphite were blended in a weight ratio of 94:6. To 100 parts by weight of the resultant mixed powder, 1 part by weight of electrolyte was added, and then stirred and mixed uniformly with a mixer to obtain particles with a certain particle size. The particulate material thus obtained was molded under pressure into a hollow cylindrical shape, which was used as a pellet of positive electrode material mixture.

Subsequently, an alkaline manganese dry battery for evaluation was fabricated. In the interior of the positive electrode case 1, a plurality of the pellets 3 of positive electrode material mixture fabricated in the above were inserted and repressed in the positive electrode case 1 to be brought into close contact with the inner face of the positive electrode case 1. Next, the separator 4 and the bottom paper 5 for insulation were inserted in the inside of the pellets 3 of positive electrode material mixture. Thereafter, the electrolyte prepared in the above was injected. After the injection of the electrolyte, the gelled negative electrode 6 was charged into the inside of the separator 4. Subsequently, the negative electrode current collector 10, which was integrated with the resin sealing plate 7, the bottom plate 8 also serving as a negative electrode terminal, and the insulating washer 9, was inserted into the gelled negative electrode 6. The open edge of the positive electrode case 1 was crimped onto the circumference of the bottom plate 8 with the edge of the resin sealing plate 7 interposed therebetween, so that the opening of the positive electrode case 1 was brought into close contact therewith. Lastly, the outer surface of the positive electrode case 1 was covered with the outer label 11, whereby the alkaline dry battery was fabricated.
Specifically, an AA-size alkaline manganese dry battery (1) for evaluation as shown in FIG. 1 was fabricated by repressing the pellets of positive electrode material mixture fabricated in the above in the case to bring them into close contact with the inner face and inserting the separator of a composite fiber made of vinylon and cellulose and the bottom paper, followed by the injection of the electrolyte as described above and charging of the gelled negative electrode (1).

AA-size alkaline manganese dry batteries (2) to (21) for evaluation corresponding to each of the gelled negative electrodes (2) to (21) were fabricated in the same manner as in the above, except that the gelled negative electrodes (2) to (21) were used in place of the gelled negative electrode (1).

### [Evaluation Test]

With respect to the 21 types of alkaline manganese dry batteries fabricated in the above, the following evaluations (a) to (c) were performed.

### (a) CCV measurement when connected to 1 Ω

One cell from each type of the batteries fabricated in the above was connected to a 1 Ω resistor for only 100 milliseconds in a 20°C atmosphere, during which a closed-circuit voltage (CCV) was measured with an oscilloscope. The minimum voltage that the battery reached while connected to 1 Ω (100 ms) was read (the average in the case that the number of test cells n = 3).

### (b) DSC pulse characteristic

One cell from each type of the batteries fabricated in the above was subjected to a discharge at a constant power of 650 mW for 28 seconds, followed by a discharge at a constant power of 1500 mW for two seconds in a 20°C atmosphere. This operation was regarded as one cycle and repeated until the lower limit voltage during the 1500 mW discharge reached 1.05 V, and the number of cycles repeated was measured. The average value obtained from this evaluation in the case that the number of test cells n = 3 was determined (number of cycles). This discharge pattern was employed to simulate the use in a digital still camera (DSC), in which the 650 mW discharge corresponds to the state where the power of the camera was turned on and the liquid crystal monitor and the like were driven, and the 1500 mW discharge corresponds to a state where flash photography was performed with the camera.

### (c) Leakage resistance test

Fifty cells from each type of the batteries fabricated in the above were subjected to a partial discharge for five hours with a constant resistance of 3.9 Ω and then allowed to stand in a 60°C environment for one month, to determine a leakage occurrence rate (%) from the number of leaked batteries.
The results of the forgoing three evaluation tests are shown in Table 2.

**[Table 2]**

| Battery | Chemical formula of surfactant | (a) | (b) | (c) |
|---|---|---|---|---|
| | | Minimum voltage reached when connected to 1 Ω [V] | DSC pulse characteristic [number of cycles] | Leakage occurrence rate [%] |
| (1) | (CH₃)₄NOH | 1.480 | 91 | 0 |
| (2) | (C₂H₅)₄NOH | 1.478 | 90 | 0 |
| (3) | (C₃H₈)₄NOH | 1.481 | 90 | 0 |
| (4) | (C₂H₅)₄NCl | 1.473 | 88 | 0 |
| (5) | (C₂H₅)₄NBr | 1.471 | 88 | 0 |
| (6) | C₂H₅(CH₃)₃NOH | 1.475 | 88 | 45 |
| (7) | C₃H₇(CH₃)₃NOH | 1.473 | 88 | 40 |
| (8) | C₆H₁₃(CH₃)₃NOH | 1. 311 | 7 0 | 5 |
| (9) | C₁₂H₂₅(CH₃)₃NOH | 1.295 | 68 | 0 |
| (10) | C₆H₁₃(C₂H₅)₃NOH | 1.303 | 70 | 0 |
| (11) | C₂H₅(CH₃)₃NCl | 1.475 | 88 | 60 |
| (12) | C₃H₇(CH₃)₃NCl | 1.466 | 86 | 40 |
| (13) | C₆H₁₃(CH₃)₃NCl | 1. 345 | 71 | 0 |
| (14) | C₁₂H₂₅(CH₃)₃NCl | 1.314 | 67 | 0 |
| (15) | C₆H₁₃(C₂H₅)₃NCl | 1. 295 | 65 | 0 |
| (16) | C₂F₅(CH₃)₃NCl | 1.458 | 84 | 50 |
| (17) | C₄F₉(CH₃)₃NCl | 1. 337 | 69 | 5 |
| (18) | C₈F₁₇(CH₃)₃NCl | 1. 284 | 61 | 0 |
| (19) | C₁₀F₂₁(CH₃)₃NCl | 1.258 | 58 | 0 |
| (20) | (C₄H₉)₄NOH | 1.348 | 78 | 10 |
| (21) | <without> | 1.481 | 90 | 60 |

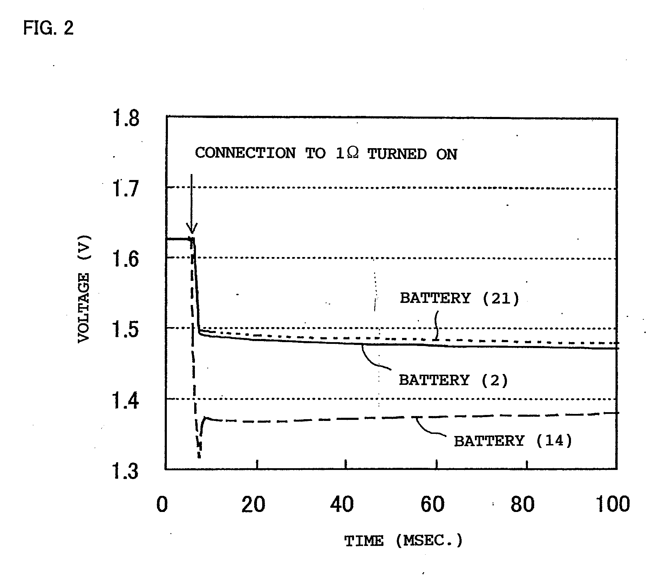

As partial results of CCV measurement, the measurement results of the batteries (2), (14) and (21) are shown in FIG. 2.
The battery (2) demonstrated the substantially same behavior as the battery (21) without any surfactant added thereto. On the other hand, in the battery (14), a sharp CCV drop was observed in the early stage. Such a difference in the CCV behavior is presumably dependent on whether the ions constituting the surfactant can be smoothly desorbed and diffused or not from the surface of zinc particles included in the negative electrode. In the batteries (1) to (5) with a tetramethylammonium salt, a tetraethylammonium salt, or a tetrapropylammonium salt added thereto, compared with the battery (21) without any surfactant added thereto, there was almost no drop in the CCV when connected to 1 Ω, the DSC pulse characteristic was maintained at a high level, and moreover, the leakage resistance performance was remarkably improved. In the batteries with other cationic surfactants (6) to (20) added thereto, either of the following tendencies (I) or (II) was observed.

(I) No effect of improving the leakage resistance performance was observed.
   The batteries (6), (7), (11), (12) and (16)
(II) The leakage resistance performance was improved, but remarkable drops in the CCV when connected to 1 Ω and the DSC pulse characteristic were observed.
   The batteries (8), (9), (10), (13), (14), (15), (17), (18), (19) and (20)

The occurrence of the differences in the leakage resistance performance, the CCV and the DSC pulse characteristic is attributable first to the low symmetry of the cationic surfactants included in the batteries (6) to (19). The surfactants included in these batteries have a structure represented by the chemical formula R(CH₃)₃N⁺, in which a comparatively long carbon chain R (a hydrophobic group) and a short carbon chain such as a methyl group are bonded with a fourth grade ammonium group (a hydrophilic group), and therefore the symmetry of the ion as a whole is low. Because of this, when the added amount of surfactant in a gelled negative electrode is small, it is difficult to form a protective coating film layer in which the ions constituting the surfactant are closely oriented and adsorbed on the surface of the zinc particles in the gelled negative electrode. Presumably, for this reason, the anticorrosion effect was hardly achieved as in (I). On the other hand, there was a case where a satisfactory anticorrosion effect was achieved notwithstanding the low symmetry when the added amount of cationic surfactant was great. In this case, in the battery with a large amount of surfactant added thereto, the leakage resistance performance is improved; however, the desorption and diffusion of the ions constituting the surfactant from the surface of zinc particles into the gelled electrolyte does not proceed smoothly in the event of instantaneous discharge at a large current. Presumably, for this reason, the drops in the CCV and the DSC pulse characteristic occurred as in (II).

The tetrabutylammonium hydroxide in the battery (20) is preferred in view of the high symmetry of tetrabutylammonium ion ((C₄H₉)₄N⁺) and its capability of forming a protective coating film layer in which the ions are closely oriented and adsorbed on the surface of the zinc particles in the gelled negative electrode. However, since the ionic size (formula weight) is large, the speed of the diffusion of the ions into the electrolyte during discharge tends to be slowed. Presumably, as a result, the drops in the CCV and the DSC pulse characteristic occurred as in the foregoing case.

In contrast, in the batteries (1) to (5) of the present invention using a cationic surfactant, the symmetry of the tetramethylammonium ion ((CH₃)₄N⁺), the tetraethylammonium ion ((C₂H₅)₄N⁺), and the tetrapropylammonium ion ((C₃H₇)₄N⁺) formed in the gelled negative electrode is high. Presumably, this made it possible to form a protective coating film layer in which the ions constituting the surfactant were closely oriented and adsorbed on the surface of zinc particles even though the added amount of the surfactant was small. Moreover, in the surfactant of the present invention, because of the moderately small ion size (formula weight), the desorption and diffusion of the ions constituting the surfactant from the surface of zinc particles into the gelled electrolyte proceeded smoothly in the event of instantaneous discharge at a large current, and therefore the CCV and the DSC pulse characteristic did not drop. Presumably, for this reason, it was possible to achieve excellent large current discharge characteristics while maintaining a sufficient anticorrosion effect in the negative electrode.

It should be noted that the battery (2) had more excellent CCV and DSC pulse characteristic than the batteries (4) and (5). It was found from this result that the anticorrosive of the present invention (a tetramethylammonium compound, a tetraethylammonium compound, or a tetrapropylammonium compound) was particularly preferably a hydroxide. In the batteries (4) and (5) with a surfactant added thereto as a chloride or a bromide, the capacity of the positive electrode and the voltage were reduced more significantly as compared with in the case of a hydroxide presumably because Cl⁻ ions or Br⁻ ions dissolved and present in the electrolyte reacted with the positive electrode active material (manganese dioxide).

As described above, in the alkaline primary battery including a tetramethylammonium compound, a tetraethyl ammonium compound, or a tetrapropylammonium compound as an anticorrosive in the negative electrode, the anticorrosive did not inhibit the discharge reaction and exert an excellent anticorrosion effect. Therefore, a battery having excellent discharge characteristics and leakage resistance performance could be obtained.

### <<Experimental Example 2>>

In this Example, an examination was made with respect to an added amount of anticorrosive.
Alkaline manganese dry batteries (A1) to (A5), (B1) to (B5), and (C1) to (C5) corresponding to gelled negative electrodes (a1) to (a5), (b1) to (b5), and (c1) to (c5) were fabricated in the same manner as in Experimental Example 1 except that in the fabrication of a gelled negative electrode, the surfactant as shown in Table 3 was added and mixed sufficiently in an amount as shown in Table 3 to give the gelled negative electrodes (a1) to (a5), (b1) to (b5), and (c1) to (c5).

**[Table 3]**

| Chemical formula of surfactant | <Type of gelled negative electrode> Added amount of surfactant per 100 parts by weight of zinc alloy powder [part by weight] | | | | |
|---|---|---|---|---|---|
| | 0.001 | 0.002 | 0.005 | 0.020 | 0.025 |
| (CH₃)₄NOH | (a1) | (a2) | (a3) | (a4) | (a5) |
| (C₂H₅)₄NOH | (b1) | (b2) | (b3) | (b4) | (b5) |
| (C₃H₈)₄NOH | (c1) | (c2) | (c3) | (c4) | (c5) |

With respect to the batteries fabricated in the above, the evaluations of (a) CCV (minimum voltage reached) measurement when connected to 1 Ω, (b) DSC pulse discharge characteristic, and (c) leakage resistance test were performed in the same manner as in Experimental Example 1. The results are shown in Table 4.

**[Table 4]**

| Battery | Chemical formula of surfactant | Added amount of surfactant per 100 parts by weight of zinc alloy powder [part by weight] | (a) | (b) | (c) |
|---|---|---|---|---|---|
| | | | Minimum voltage reached when connected to 1 Ω [V] | DSC pulse characteristic [number of cycles] | Leakage occurence rate [%] |
| (A1) | (CH₃)₄NOH | 0.001 | 1.481 | 90 | 30 |
| (A2) | | 0.002 | 1.481 | 91 | 0 |
| (A3) | | 0.005 | 1.480 | 90 | 0 |
| (A4) | | 0.020 | 1.478 | 90 | 0 |
| (A5) | | 0.025 | 1.431 | 82 | 0 |
| (B1) | (C₂H₅)₄NOH | 0.001 | 1.480 | 91 | 20 |
| (B2) | | 0.002 | 1.481 | 91 | 0 |
| (B3) | | 0.005 | 1.480 | 91 | 0 |
| (B4) | | 0.020 | 1.480 | 90 | 0 |
| (B5) | | 0.025 | 1.440 | 80 | 0 |
| (C1) | (C₃H₈)₄NOH | 0.001 | 1.480 | 90 | 20 |
| (C2) | | 0.002 | 1.478 | 90 | 0 |
| (C3) | | 0.005 | 1.479 | 89 | 0 |
| (C4) | | 0.020 | 1.477 | 89 | 0 |
| (C5) | | 0.025 | 1.413 | 77 | 0 |

From the results above, it was found that when any one of tetramethylammonium hydroxide, tetraethylammonium hydroxide, and tetrapropylammonium hydroxide was used, excellent CCV, DSC pulse characteristic, and leakage resistance performance were obtained. In particular, when the added amount of tetramethylammonium hydroxide, tetraethylammonium hydroxide, or tetrapropylammonium hydroxide falls within the range of 0.002 to 0.02 part by weight per 100 parts by weight of zinc alloy powder, it was possible to obtain higher discharge characteristics and leakage resistance performance as well.

### <<Experimental Example 3>>

Next, an examination was made with respect to an alkaline primary battery including a positive electrode including nickel oxyhydroxide, in which the type and the amount of an anticorrosive for negative electrode were varied.
Electrolytic manganese dioxide, nickel oxyhydroxide, and graphite were mixed in a weight ratio of 47:47:6, whereby a mixed powder was prepared. To 100 parts by weight of the mixed powder, 1 part by weight of electrolyte was added and mixed, and homogeneously stirred and mixed with a mixer to obtain particles with a certain particle size. The particulate material thus obtained was molded under pressure into a hollow cylindrical shape to give a pellet of positive electrode material mixture. A AA-size nickel-based alkaline dry battery (X1) as shown in FIG. 1 was fabricated in the same manner as in Experimental Example 1 and Experimental Example 2 except the foregoing pellet and the gelled negative electrode (a1) as used in Experimental Example 2 were used. The nickel oxyhydroxide used here was prepared by neutralizing an aqueous nickel sulfate solution with alkali to give nickel hydroxide, and then allowing the nickel hydroxide to be subjected to chemical oxidation with an aqueous sodium hypochlorite solution.

In addition, in the same manner as above, except that the gelled negative electrodes (a2) to (a5), (b1) to (b5), and (c1) to (c5) in Experimental Example 2 were used in place of the gelled negative electrode (a1), AA-size nickel-based alkaline dry batteries (X2) to (X5), (Y1) to (Y5), and (Z1) to (Z5) corresponding to each of the gelled negative electrodes were fabricated. Moreover, an AA-size nickel-based alkaline dry battery (W) for comparison was fabricated in the same manner as described above except that the gelled negative electrode (21) in Experimental Example 1 for comparison without any surfactant added thereto was used.
With respect to the batteries fabricated in the above, the evaluations of (a) CCV (minimum voltage reached) measurement when connected to 1 Ω, (b) DSC pulse discharge characteristic, and (c) leakage resistance test were performed in the same manner as in Experimental Example 1 and Experimental Example 2. The results are shown in Table 5.

**[Table 5]**

| Battery | Chemical formula of surfactant | Added amount of surfactant per 100 parts by weight of zinc alloy powder [part by weight] | (a) | (b) | (c) |
|---|---|---|---|---|---|
| | | | Minimum voltage reached when connected to 1 Ω [V] | DSC pulse characteristic [number of cycles] | Leakage occurrence rate [%] |
| (X1) | (CH₃)₄NOH | 0.001 | 1.575 | 181 | 30 |
| (X2) | | 0.002 | 1.575 | 182 | 0 |
| (X3) | | 0.005 | 1.573 | 185 | 0 |
| (X4) | | 0.020 | 1.571 | 181 | 0 |
| (X5) | | 0.025 | 1.515 | 116 | 0 |
| (Y1) | (C₂H₅)₄NOH | 0.001 | 1.574 | 180 | 35 |
| (Y2) | | 0.002 | 1.573 | 182 | 0 |
| (Y3) | | 0.005 | 1.573 | 188 | 0 |
| (Y4) | | 0.020 | 1.572 | 180 | 0 |
| (Y5) | | 0.025 | 1.510 | 113 | 0 |
| (Z1) | (C₃H₈)₄NOH | 0.001 | 1.574 | 180 | 30 |
| (Z2) | | 0.002 | 1.574 | 182 | 0 |
| (Z3) | | 0.005 | 1.573 | 186 | 0 |
| (Z4) | | 0.020 | 1.570 | 183 | 0 |
| (Z5) | | 0.025 | 1.501 | 110 | 0 |
| (W) | Without | | 1.575 | 180 | 70 |

It was found that also in the batteries including a positive electrode including nickel oxyhydroxide, as in the case of the alkaline manganese battery (Experimental Example 2), excellent CCV, DSC pulse characteristic, and leakage resistance performance were obtained. When any one of tetramethylammonium hydroxide, tetraethylammonium hydroxide, and tetrapropylammonium hydroxide was used for the anticorrosive, the same tendency was observed.

It was also found that, even in the batteries including a positive electrode including nickel oxyhydroxide, the addition of tetramethylammonium hydroxide, tetraethylammonium hydroxide, or tetrapropylammonium hydroxide in an amount within the range of 0.002 to 0.02 part by weight per 100 parts by weight of zinc alloy powder could provide higher discharge characteristics and improved leakage resistance performance at the same time.
It should be noted that the inclusion of nickel oxyhydroxide in the positive electrode made it possible to maintain a high positive electrode potential, and the heavy-load discharge characteristics of the battery as a whole to be more dominated (regulated) by the negative electrode. With regard to the DSC pulse characteristic in Table 5, when the added amount of anticorrosive was 0.005 part by weight per 100 parts by weight of zinc alloy powder, the number of cycles reached the maximum, whereas when the added amount of anticorrosive was 0.025 part by weight per 100 parts by weight of zinc alloy powder, the number of cycles was approximately 60% of the maximum. Such phenomenon was not observed in the alkaline manganese batteries (Table 4). Presumably, this was because in the nickel-based batteries, a slight difference in discharge performance in the negative electrodes was reflected (elicited) responsively in the form of a difference in characteristics.

It should be noted that in each battery in the foregoing Experimental Examples 1 to 3, although only one selected from a tetramethylammonium compound, a tetraethylammonium compound, and a tetrapropylammonium compound was used, using two or more of these in combination will produce the same effect. Moreover, in Experimental Examples 2 and 3, a hydroxide of the foregoing ammonium compounds was used, using a chloride or a bromide will produce the same effect.

### Industrial Applicability

The alkaline primary battery according to the present invention is excellent in discharge characteristics and leakage resistance, and therefore suitably applicable for a wide range of application from various electronic equipment to general-purpose equipment such as toys and lights.

## Claims

1. An alkaline primary battery comprising a positive electrode including a positive electrode active material, a negative electrode including a negative electrode active material, a separator interposed between said positive electrode and said negative electrode, and an electrolyte, wherein
said negative electrode further includes at least one compound selected from the group consisting of a tetramethylammonium compound, a tetraethylammonium compound, and a tetrapropylammonium compound.

2. The alkaline primary battery in accordance with claim 1, wherein said at least one compound is a hydroxide, a chloride, or a bromide.

3. The alkaline primary battery in accordance with claim 1, wherein said compound is a hydroxide.

4. The alkaline primary battery in accordance with claim 1, wherein said negative electrode includes said compound in an amount of 0.002 to 0.02 part by weight per 100 parts by weight of said negative electrode active material.

5. The alkaline primary battery in accordance with claim 1, wherein said positive electrode active material is nickel oxyhydroxide.

6. An alkaline primary battery comprising
a positive electrode including electrolytic manganese dioxide as a positive electrode active material and including graphite as a conductive material,
a negative electrode including zinc or a zinc alloy as a negative electrode active material,
a separator interposed between said positive electrode and said negative electrode, and
an electrolyte, wherein:
said negative electrode further includes at least one compound selected from the group consisting of a tetramethylammonium compound, a tetraethylammonium compound, and a tetrapropylammonium compound;
said alkaline primary battery is an AA-size alkaline manganese dry battery; and
a minimum value of a closed-circuit voltage of said AA-size alkaline manganese dry battery when connected to a 1 Ω resistor for 100 milliseconds at a temperature of 20°C and is 1.45 V or higher.

7. An alkaline primary battery comprising:
a positive electrode including electrolytic manganese dioxide and nickel oxyhydroxide as a positive electrode active material and including graphite as a conductive material,
a negative electrode including zinc or a zinc alloy as a negative electrode active material,
a separator interposed between said positive electrode and said negative electrode, and
an electrolyte, wherein:
said negative electrode further includes at least one compound selected from the group consisting of a tetramethylammonium compound, a tetraethylammonium compound, and a tetrapropylammonium compound;
said alkaline primary battery is an AA-size nickel-based alkaline dry battery; and
a minimum value of a closed-circuit voltage of said AA-size nickel-based alkaline dry battery when connected to a 1 Ω resistor for 100 milliseconds at a temperature of 20°C is 1.55 V or higher.
